# EUROPÄISCHE PATENTSCHRIFT

(11) **EP 0 498 928 B1**
(45) Veröffentlichungstag und Bekanntmachung des Hinweises auf die Patenterteilung: **18.05.1994**
(21) Anmeldenummer: 91117776.4
(22) Anmeldetag: 18.10.1991
(51) Int. Cl.: E04F 15/12

(54) **Verfahren zum Sanieren von gefliesten Flächen**
Method to restore tiled surfaces
Méthode pour restaurer les surfaces carrelées

(30) Priorität: 09.02.1991 DE 4103978
(43) Veröffentlichungstag der Anmeldung: 19.08.1992
(73) Patentinhaber: Hunkemöller, Paul, D-48653 Coesfeld (DE)
(72) Erfinder: Hunkemöller, Paul, D-48653 Coesfeld (DE)
(74) Vertreter: Habbel, Hans-Georg, Dipl.-Ing.

(56) Entgegenhaltungen:
- CH-A- 555 459
- US-A- 1 925 302
- US-A- 2 294 247

## Beschreibung

Die Erfindung betrifft ein Verfahren zum Sanieren von gefliesten Flächen, wobei die Fliesen an der Wand oder am Boden verbleiben.

Bei der Sanierung von Küchen, Badezimmern oder anderen Räumen, bei denen geflieste Flächen vorkommen, besteht häufig das Problem, die alten Fliesen zu entfernen und durch eine neue, optisch aktraktivere Wandverkleidung zu ersetzen. Insbesondere bei Altbauten haften die Fliesen so stark an den Wänden, daß das Entfernen der alten Fliesen mit einem sehr großen Zeit- und Arbeitsaufwand und damit mit einem großen Kostenaufwand verbunden ist, wobei gleichzeitig das Entfernen von alten Fliesen mit einer großen Lärm- und Staubbelästigung verbunden ist.

Daher wird in vielen Fällen gemäß dem gattungsbildenden Oberbegriff des Anspruches 1 so verfahren, daß die alten Fliesen an den Wänden oder Böden verbleiben und daß eine neue, optisch attraktivere Oberfläche auf die alten Fliesen aufgebracht wird. Zu diesem Zweck werden entweder Kunststoffplatten mit einer imitierten Fliesenoberfläche auf die bisherigen Fliesen aufgeklebt oder die alten Fliesen werden mit einer Dünnputzschicht versehen, in welche die neuen Fliesen geklebt werden.

In beiden Fällen werden also neue Fliesen entweder einzeln oder als Platte und entweder aus Keramik oder aus Kunststoff auf die alten Fliesen aufgeklebt. Die Dicke dieser neuen aufzubringenden Schicht bzw. Schichten macht neue Anschlüsse für Wasserhähne und sonstige Sanitärinstallationen erforderlich. Anbauten an der Wand, wie Waschbecken, Boiler, Badewannen u. dgl. müssen entweder unter grobem Kosten- und Arbeitsaufwand um das neue Schichtmaß von der Wand entfernt neu angebracht werden oder sie müssen von der neuen Fliesenschicht umgeben werden, so daß die Fliesen in diesem Bereich nicht erneuert oder überdeckt werden, was den gewünschten, optisch verbesserten Eindruck der neuen Fliesengestaltung teilweise wieder zunichtemacht.

Aus der US-PS 2 294 247 ist es bekannt, Wand- oder Bodenflächen mit einer Latexschicht zu beschichten und anschließend eine neue Oberfläche in Form einer Verschleißschicht zu versehen. Die Latexschicht dient dabei als Haftgrund und weist vorzugsweise Schichtstärken von ca. 1 cm auf. Die Verschleißschicht kann eine Dicke von 0,8 cm oder mehr aufweisen.

Für die Sanierung gefliester Flächen bedeutet eine Verfahrensweise nach der US-PS 2 294 247, daß die Fliesenstruktur vom Haftgrund und von der schützenden Oberfläche verdeckt wird und daß weiterhin die oben geschilderten Nachteile aufgrund der hohen Schichtdicke auftreten. Anschlüsse für sanitäre Einrichtungen müßten neu gelegt werden.

Der Erfindung liegt die Aufgabe zugrunde, ein gattungsgemäßes Verfahren dahingehend zu verbessern, daß bei dem Überstreichen gefliester Flächen die Fugen auf einfache Art kenntlich gemacht werden können, ohne daß die Kennzeichnung als solche deutlich wird, wobei die Kennzeichnung eine lange Haltbarkeit gegenüber Abrieb oder Beschädigungen aufweist.

Diese der Erfindung zugrundeliegende Aufgabe wird gemäß dem kennzeichnenden Merkmal des Anspruches 1 gelöst.

Eine vorteilhafte Ausgestaltung des erfindungsgemäßen Verfahrens ist im Anspruch 2 beschrieben.

Die Erfindung schlägt mit anderen Worten vor, die alten Fliesen zu entfetten und mit einer flüssigen, pastösen oder thixotropen neuen Oberflächenschicht zu versehen, die durch einen vorher aufgebrachten Haftgrund zuverlässig auf den alten Fliesen befestigt ist. Auf diese Weise können beispielsweise Farben oder Muster der alten Fliesen verdeckt werden und ebenso die feinen Risse, die sich in der Oberfläche vieler alter Kacheln gebildet haben. Die Oberflächenbehandlung der Fliesen ist weder mit Geräusch- noch mit Staubbelästigung verbunden und erfolgt großflächig und schnell, so daß neben der Belästigung auch die Kostenbelastung minimal gehalten wird.

Schließlich ist die aufgetragene Schichtdicke so minimal, daß aus der Wand herausragende Anschlüsse für Frisch- oder Abwasserleitungen ohne Veränderungen oder Verlängerungen mit den entsprechenden Installationseinrichtungen verbunden werden können oder von vornherein verbunden bleiben können.

Das Verfahren besteht darin, daß die Fliesenoberflächen von Seifenresten, Fettspritzern od. dgl. gesäubert und entfettet werden. Anschließend wird mit einem Tuch ein beispielsweise flüssiger Haftgrund aufgetragen, auf den schließlich die flüssige oder pastöse Wandbeschichtung aufgetragen wird. Das Arbeiten erfolgt großflächig und schnell, da beispielsweise mit einer Rolle große Flächen gleichzeitig erfaßt und behandelt werden und nicht die Behandlung einzelner Kacheln nacheinander erfolgt.

Bei dieser Oberflächenbeschichtung werden sowohl die Kacheln als auch die Fugen beschichtet, was eine sehr gleichmäßige Oberfläche ergibt, die reliefartig durch die Fugen strukturiert wird. Je nach der Stärke der Musterung des Untergrundes ist ein wiederholtes Auftragen der Oberflächenbeschichtung vorteilhaft.

Zur Konturierung und Strukturierung der Fläche wird das Fugenbild dadurch verstärkt und unterstützt, daß die Fugen farblich von der Gesamtfläche abgesetzt werden. Die Oberfläche wird anschließend mit einem Oberflächenfilm geschützt, der ebenfalls in flüssiger oder pastöser Form vorliegt und der beispielsweise aufgestrichen oder aufgerollt werden kann. Dieser Oberflächenfilm deckt die aufgebrachte Fugenmarkierung ebenfalls ab und schützt sowohl die Oberfläche der Fliesen als auch die Fugen vor mechanischen und chemischen Einwirkungen und vor Abrieb. Darüber hinaus bewirkt der Oberflächenfilm, daß die Kennzeichnung als solche nicht deutlich wird.

Der Oberflächenfilm kann hochglänzend oder mit einer matten Oberfläche versehen sein, um so verschiedene gewünschte optische Erscheinungen der Oberfläche zu ermöglichen.

Zur Markierung der Fuge wird ein Fugenband auf die Fugen geklebt. Das Fugenband sichert eine gleichmäßige Breite und Farbintensität der markierten Fuge. Das Fugenband kann vorteilhaft selbstklebend sein und ermöglicht so eine möglichst gerade Linienführung über größere Strecken.

Bei der Verwendung thixotroper Stoffe für die Oberflächenbeschichtung oder den Oberflächenfilm kann eine rauhe oder wellige neue Oberfläche der Fliesen geschaffen werden. So wird nicht nur ein besonderer optischer Effekt erzielt, sondern es wird möglich, eventuelle Unebenheiten oder Unregelmäßigkeiten der alten Fliesenoberfläche unauffälliger zu gestalten.

Die Materialien für den Haftgrund, die Oberflächenbeschichtung und den Oberflächenfilm können vorteilhaft aus einem System aufeinander abgestimmter flüssiger oder pastöser Kunststoffe bestehen, die die entsprechenden geforderten Eigenschaften, wie gute Haftung, gute Deckkraft und gute mechanische und chemische Beständigkeit aufweisen. Auf dieses System kann auch das Fugenband abgestimmt sein, so daß eine optisch ansprechende und technisch jahrelang beständige neue Oberfläche für die gefliesten Flächen ermöglicht wird.

## Patentansprüche

1. Verfahren zum Sanieren von gefliesten Flächen, wobei die Fliesen an der Wand oder am Boden verbleiben und mit einer Deckschicht versehen werden, dadurch gekennzeichnet, daß die Flächen zunächst gesäubert und entfettet werden und daß anschließend ein Haftgrund und schließlich eine flüssige, pastöse oder thixotrope Wandbeschichtung aufgetragen wird, wobei anschließend die Fliesenfugen auf der neuen Oberfläche mittels eines Fugenbandes, das auf die Fugen aufgeklebt wird, farblich markiert und von der Gesamtfläche abgesetzt werden, worauf schließlich die erzielte neue Oberfläche mit einem Oberflächenfilm geschützt wird, der in flüssiger, pastöser oder thixotroper Form auf die neue Oberfläche aufgetragen wird und der die aufgebrachte Fugenmarkierung ebenfalls abdeckt.

2. Verfahren nach Anspruch 1, dadurch gekennzeichnet, daß die Fugen mittels eines selbstklebenden Fugenbandes markiert werden.

## Claims

1. A method of renovating tiled surfaces, wherein the tiles remain on the wall or floor and are provided with a covering layer, characterized in that the surfaces are firstly cleaned and degreased and in that a base and finally a liquid, pasty or thixotropic wall coating are applied, the tile joints subsequently being marked in colour on the new surface by means of a joint tape, which is adhered to the joints, and contrasted with the overall surface, whereupon the desired new surface is finally protected with a surface film which is applied in liquid, pasty or thixotropic form to the new surface and which likewise covers the applied joint marking.

2. A method according to claim 1, characterized in that the joints are marked by means of a self-adhesive joint tape.

## Revendications

1. Procédé pour l'assainissement de surfaces carrelées, dans lequel les carreaux demeurent sur le mur ou sur le sol et sont pourvus d'une couche de couverture, caractérisé en ce que les surfaces sont d'abord nettoyées et dégraissées et en ce qu'une couche de fond adhésive, puis un enduit pour murs liquide, pâteux ou thixotrope sont appliqués, les joints des carreaux étant ensuite marqués en couleur sur la nouvelle surface et démarqués de l'ensemble de la surface au moyen d'une bande couvre-joint qui est collée sur les joints, la nouvelle surface obtenue étant enfin protégée par un film de surface qui est appliqué sous forme liquide, pâteuse ou thixotrope sur la nouvelle surface et recouvre également le marquage des joints qui a été appliqué.

2. Procédé selon la revendication 1, caractérisé en ce que les joints sont marqués au moyen d'une bande couvre-joint autocollante.
